Europäisches Patentamt

European Patent Office

Office européen des brevets

(19)

(11) **EP 0 864 919 A2**

(12) **EUROPEAN PATENT APPLICATION**

(43) Date of publication:
16.09.1998 Bulletin 1998/38

(51) Int Cl.⁶: **G03B 35/04**

(21) Application number: **98301150.3**

(22) Date of filing: **17.02.1998**

| | |
|---|---|
| (84) Designated Contracting States:<br>**AT BE CH DE DK ES FI FR GB GR IE IT LI LU MC NL PT SE**<br>Designated Extension States:<br>**AL LT LV MK RO SI** | (72) Inventors:<br>• **Kanematsu, Atsunobu**<br>  **Akishima-shi, Tokyo-to (JP)**<br>• **Koike, Hideo**<br>  **Kanagawa-ken (JP)** |
| (30) Priority: **18.02.1997 JP 49832/97**<br>        **23.10.1997 JP 308127/97** | (74) Representative: **Crawford, Andrew Birkby et al**<br>**A.A. THORNTON & CO.**<br>**Northumberland House**<br>**303-306 High Holborn**<br>**London WC1V 7LE (GB)** |
| (71) Applicant: **VICTOR COMPANY OF JAPAN, LTD.**<br>**Yokohama-Shi, Kanagawa-Ken (JP)** | |

(54) **Apparatus, method image and storage medium for recording stereoscopic image**

(57)     An image recording apparatus has a projector having a projecting lens system to project images onto a photosensitive storage medium. The apparatus also has a lens plate having aligned lenses, provided between the projector and the storage medium. The lens plate is distant from the projector with a specific distance between an exit pupil of the projecting lens system and a focal plane of the lens plate. The storage medium is placed on a focal plane of the lens plate. The lens plate rotates in at least specific direction per predetermined angle for projecting the images on the recording medium one by one via the lens plate, thus a stereoscopic image or two-dimensional images being recorded on the storage medium. The direction and the angle are decided based on a positional relationship between at least one camera and an object photographed for forming the images. An aperture stop is provided in an optical path through which the image is projected onto the recording medium to adjust an effective aperture of the projecting lens system. Deformed image data is generated based on an angle between an optical axis of the projecting lens system and the lens plate and an angle of view of the projector for cancelling trapezoidal distortion caused in the stereoscopic image if not defined by perspective when photographed or the two-dimensional images. An image frame of the stereoscopic image or each two-dimensional image is thus deformed into a trapezoid according to the deformed image data.

FIG. 5

**Description**

BACKGROUND OF THE INVENTION

The present invention relates to stereoscopic image recording with a recording apparatus provided with a lens plate such as a bellow lens plate and a cylindrical convex lens array plate.

Stereoscopic photography has been well known as one of the means to let an observer has a stereoscopic feeling. An idea of observing a three-dimensional image from any viewpoint was proposed at the beginning of the 20th century. However, no proposal to put such an idea into practical use had never been announced until 1960.

Parallax panoramagram with vertically striped slits (a parallax barrier) was proposed at first as the stereoscopic photography. Proposed next was a stereoscopic photography for forming an image on a photosensitive storage medium with a lens plate such as a bellow lens plate and a cylindrical convex lens array plate.

However, a reverse real image is reproduced in the latter stereoscopic photography. And hence, another stereoscopic photography has been proposed. The photography employs two-stage integral photography for focussing a reverse real image on a photosensitive storage medium to form an image with a bellow lens plate or a cylindrical convex lens array plate.

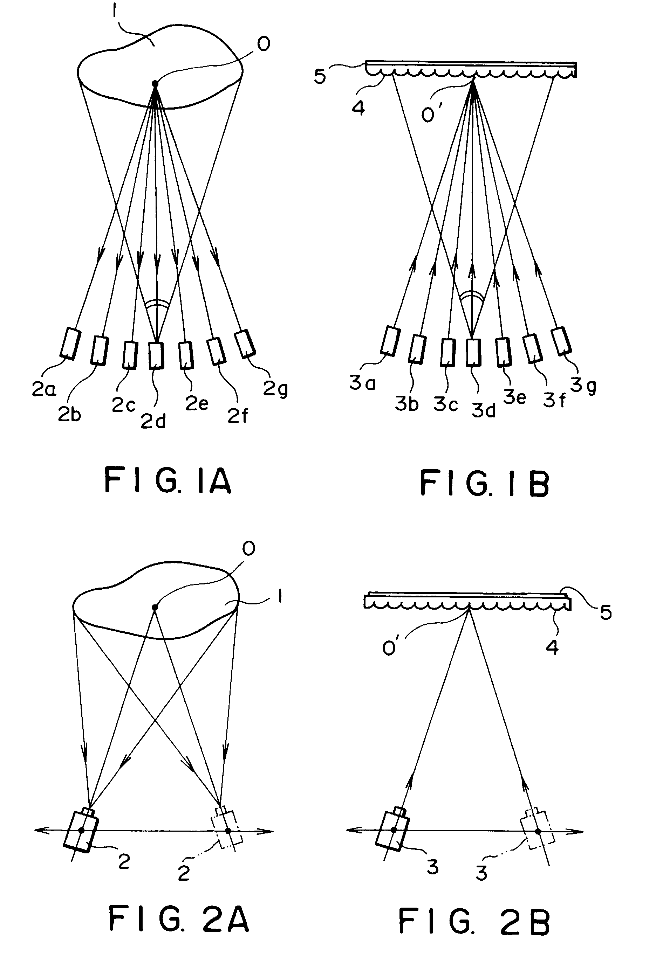

Still other methods of producing stereoscopic images have been proposed as shown in FIGS. 1A to 4B. In these methods, an object is photographed by monocular cameras from several directions. A plurality of images formed by the cameras are projected by a projector onto a photosensitive storage medium and focused thereon via a cylindrical convex lens array plate to form a stereoscopic image.

Shown in FIG. 1A is that an object 1 is photographed by a plurality of monocular cameras 2a, 2b, ..., 2f and 2g. The cameras are placed so that an optical axis of each camera passes through a point O included in a plane of the object 1; and distances between the point O and exit pupils of imaging lenses of the cameras are the same as each other.

Shown in FIG. 1B is that images produced by the cameras 2a, 2b ..., 2f and 2g of FIG. 1A are projected by projectors 3a, 3b ..., 3f and 3g onto a photosensitive storage medium 5 placed on a focal plane of a cylindrical convex lens array plate 4 to form a stereoscopic image. The plate 4 is placed so that its cylindrical axis orthogonally goes across a plane including optical axes of projecting lenses of the projectors. The projectors are placed so that an optical axis of each projector passes through a point O' included in a plane of the storage medium 5; and distances between the point O' and exit pupils of the projecting lenses of the projectors are the same as each other.

Further, the distances between the point O and the exit pupils of the imaging lenses in FIG. 1A and the distances between the point O' and the exit pupils of the projecting lenses in FIG. 1B are the same as each other.

Next, shown in FIG. 2A or 2B (3A or 3B) is that a monocular camera 2 or projector 3 is placed so that an optical axis of an imaging lens of the camera 2 or a projecting lens of the projector 3 passes through the point O or O' included in a plane of the object 1; and the camera 2 or projector 3 is moved along a straight (curved) line to photograph an image of the object 1 or project the image onto the photosensitive storage medium 5 via the cylindrical convex lens array plate 4.

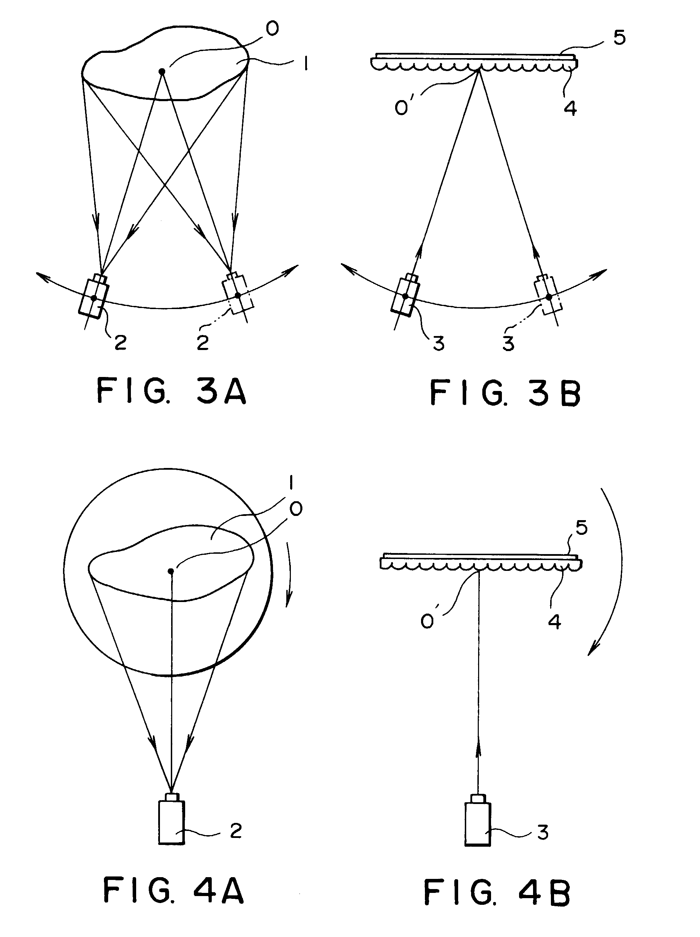

Further, shown in FIG. 4A or 4B is that a monocular camera 2 or projector 3 is fixed so that an optical axis of an imaging lens of the camera 2 or a projecting lens of the projector 3 passes through the point O or O' included in a plane of the object 1; and the object 1 or the photosensitive storage medium 5 fixed on the cylindrical convex lens array plate 4 is turned around the point O or O' in a direction indicated by an arrow to photograph an image of the object 1 or project the image onto the photosensitive storage medium 5 via the cylindrical convex lens array plate 4.

However, the conventional stereoscopic image recording apparatus have the following drawbacks.

Firstly, the projectors shown in FIGS. 1A to 4B employ a projecting lens with a large effective aperture to obtain a bright image. A wide image is thus formed on the photosensitive storage medium 5 fixed on the lens plate 4 with a plurality of aligned lenses for recording a stereoscopic image. This results in recording of a stereoscopic image exhibiting a low resolution. Further, such projectors do not have a constant luminance distribution. This results in a stereoscopic image with a bright portion on its center and dark portions on its periphery.

Furthermore, difficulty lies in installation of a lens plate 4 with a plurality of aligned lenses and a image recorded-photosensitive storage medium in an accurate positional relationship for reproduction of a stereoscopic image. In this regard, Japanese Utility Model Publication No. 3 (1991)-50501 discloses a film holder. However, the usage of the film holder is difficult to master.

SUMMARY OF THE INVENTION

An object of the present invention provides an image recording apparatus achieving simple installation of a lens plate and a storage medium with an accurate positional relationship.

Another object of the present invention provides an image recording apparatus and a method of recording stereoscopic images or two-dimensional images with no distortion.

Still another object of the present invention provides a storage medium on which stereoscopic images or two-dimensional images with no distortion are recorded by the recording method.

The present invention provides an image recording apparatus comprising: a projector having at least one projecting lens to project a plurality of images onto a photosensitive storage medium; a lens plate having a plurality of aligned lenses, provided between the projector and the storage medium, the lens plate being distant from the projector with a specific distance between an exit pupil of the projecting lens and a focal plane of the lens plate, the storage medium being placed on a focal plane of the lens plate; a rotator to rotate the lens plate in at least one specific direction per predetermined angle for projecting the images on the recording medium one by one via the lens plate, thus at least one stereoscopic image or a plurality of two-dimensional images being recorded on the storage medium, the direction and the angle being decided on the basis of a positional relationship between at least one camera and an object photographed for forming the images; and an aperture adjuster to adjust an effective aperture of the projecting lens, the aperture adjuster being provided in an optical path through which the image is projected onto the recording medium.

Further, the present invention provides an image recording apparatus comprising: a projector having at least one projecting lens to project a plurality of images onto a photosensitive storage medium; a lens plate having a plurality of aligned lenses, provided between the projector and the storage medium, the lens plate being distant from the projector with a specific distance between an exit pupil of the projecting lens and a focal plane of the lens plate, the storage medium being placed on a focal plane of the lens plate; a rotator to rotate the lens plate in at least one specific direction per predetermined angle for projecting the images on the recording medium one by one via the lens plate, thus at least one stereoscopic image or a plurality of two-dimensional images being recorded on the storage medium, the direction and the angle being decided on the basis of a positional relationship between at least one camera and an object photographed for forming the images; and a generator to generate deformed image data on the basis of an angle between an optical axis of the projecting lens and the lens plate and an angle of view of the projector for cancelling trapezoidal distortion caused in the stereoscopic image if not defined by perspective or the two-dimensional images, thus an image frame of the stereoscopic image or each two-dimensional image being deformed into a trapezoid according to the deformed image data.

Further, the present invention provides an image recording method comprising the steps of: projecting a plurality of images by a projector having at least one projecting lens onto a photosensitive storage medium; rotating a lens plate in at least one specific direction per predetermined angle for projecting the images on the recording medium one by one via the lens plate, thus at least one stereoscopic image or a plurality of two-dimensional images being recorded on the storage medium, the direction and the angle being decided on the basis of a positional relationship between at least one camera and an object photographed for forming the images, the lens plate being provided between the projecting lens and the storage medium, the lens plate being distant from the projector with a specific distance between an exit pupil of the projecting lens and a focal plane of the lens plate, the storage medium being placed on a focal plane of the lens plate; and generating deformed image data on the basis of an angle between an optical axis of the projecting lens and the lens plate and an angle of view of the projector for cancelling trapezoidal distortion caused in the stereoscopic image if not defined by perspective or the two-dimensional images, thus an image frame of the stereoscopic image or each two-dimensional image being deformed into a trapezoid according to the deformed image data.

Further, the present invention provides a storage medium on which at least one stereoscopic image has or a plurality of two-dimensional images have been recorded by projecting a plurality of images by a projector having at least one projecting lens onto the storage medium, rotating a lens plate in at least one specific direction per predetermined angle for projecting the images on the storage medium one by one via the lens plate to record the stereoscopic image or the two-dimensional images on the storage medium, the direction and the angle being decided on the basis of a positional relationship between at least one camera and an object photographed for forming the images, the lens plate being provided between the projecting lens and the storage medium, the lens plate being distant from the projector with a specific distance between an exit pupil of the projecting lens and a focal plane of the lens plate, the storage medium being placed on a focal plane of the lens plate, and generating deformed image data on the basis of an angle between an optical axis of the projecting lens and the lens plate and an angle of view of the projector for cancelling trapezoidal distortion caused in the stereoscopic image if not defined by perspective or the two-dimensional images, an image frame of the stereoscopic image or each two-dimensional image being deformed into a trapezoid according to the deformed image data.

## BRIEF DESCRIPTION OF DRAWINGS

FIGS. 1A and 1B are illustrations for explaining conventional stereoscopic photography;
FIGS. 2A and 2B are other illustrations for explaining conventional stereoscopic photography;
FIGS. 3A and 3B are still other illustrations for explaining conventional stereoscopic photography;
FIGS. 4A and 4B are further illustrations for explaining conventional stereoscopic photography;
FIG. 5 is a schematic perspective illustration of a preferred embodiment of a stereoscopic image recording apparatus according to the present invention;

FIGS. 6A to 6C are schematic illustrations of a recording operation of the stereoscopic image recording apparatus shown in FIG. 5;

FIGS. 7A to 7C are schematic illustrations of conditions of a stereoscopic image recorded on a photosensitive storage medium without an aperture stop;

FIGS. 8A to 8C are other schematic illustrations of conditions of a stereoscopic image recorded on a photosensitive storage medium with an aperture stop according to the present invention;

FIGS. 9A to 9C are still other schematic illustrations of conditions of a stereoscopic image recorded on a photosensitive storage medium;

FIGS. 10A and 10B are schematic illustrations of aperture stops provided in a projecting lens system of a projector according to the present invention;

FIG. 11 is a schematic illustration of the optical system of the projector installed in the stereoscopic image recording apparatus according to the present invention;

FIGS. 12A and 12B are schematic perspective illustrations of position restricting fittings.

FIG. 13 is an illustration for explaining generation of trapezoidal distortion;

FIGS. 14A to 14C are schematic illustrations for explaining a method of eliminating trapezoidal distortion;

FIG. 15 is a block diagram showing a preferred embodiment of essential portions of a deformed image data generator according to the present invention;

FIG. 16 is an illustration for explaining image projection;

FIG. 17 is a schematic illustration of a projecting lens system of a projector;

FIG. 18 is a schematic illustration of another projecting lens system of a projector;

FIGS. 19A to 19C are schematic illustrations for explaining a principle of generating deformed original image data with the projecting lens system shown in FIG. 17;

FIGS. 20A to 20C are schematic illustrations for explaining a principle of generating deformed original image data with the projecting lens system shown in FIG. 18;

FIGS. 21A to 21C are schematic illustrations for explaining image projection;

FIGS. 22A and 22B are other schematic illustrations for explaining a principle of generating deformed original image data; and

FIG. 23 is a flowchart for explaining the operation of the deformed image data generator shown in FIG. 15.

DETAILED DESCRIPTION OF THE PREFERRED EMBODIMENTS

Preferred embodiments according to the present invention will be described with reference to the attached drawings.

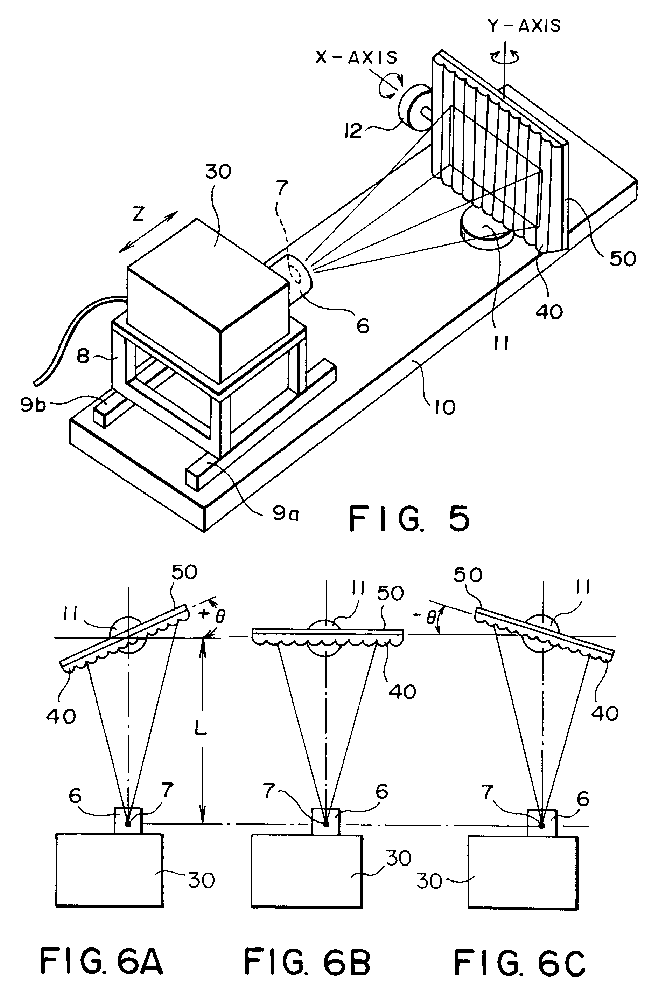

In FIG. 5, a stereoscopic image recording apparatus according to the present invention is provided with a projector 30. The projector 30 has a projecting lens system 6 with an aperture adjusting means such as an aperture stop 7.

The stereoscopic image recording apparatus is further provided with a lens plate 40 with a plurality of aligned lenses for recording a stereoscopic image. The lens plate 40 is placed with a specific distance from the projector 30. The lens plate 40 in this embodiment is a cylindrical convex lens array plate. A bellow lens plate can be used instead of the cylindrical convex lens array plate.

The stereoscopic image recording apparatus is still further provided with a photosensitive storage medium 50 placed on a focal plane of the cylindrical convex lens array plate as the lens plate 40.

In operation, the projector 30 is fixed while the lens plate 40 is turned around the Y-axis so that the X-axis of the lens plate 40 is inclined with respect to an optical axis of the projecting lens system 6. More in detail, the lens plate 40 is rotated by an angle that is identical to an angle formed by an imaging lens of a camera (not shown) with respect to the X-axis when photographing. An image is then projected by the projector 30 onto the photosensitive storage medium 50 and focused thereon by the lens plate 40 to record a stereoscopic image.

In FIG. 5, the lens plate 40 is rotatably supported by a Y-axis rotary base 11. An X-axis rotary base 12 is also provided for a bellow lens plate when used instead of the cylindrical convex lens array plate as the lens plate 40. The bellow lens plate will be rotatably supported by both the Y-axis and X-axis rotary bases 11 and 12, and turned around the X-axis as the horizontal axis by the X-axis rotary base 12.

The projector 30 is fixed on a mount 8 that is movable in a direction of Z-axis along rails 9a and 9b provided on a base 10. The projector 30 will be moved in the Z-axis direction to provide a distance L shown in FIG. 6A between the exit pupil of the projecting lens system 6 of the projector 30 and the focal plane of the cylindrical convex lens array plate as the lens plate 40, or between the projector 30 and plate 40 to form an image of a predetermined size thereon.

Among FIGS. 6A to 6C as schematic illustrations of a recording operation of the stereoscopic image recording apparatus of FIG. 5, FIG. 6B shows that the optical axis of the projecting lens system 6 of the projector 30 agrees with, or forms a straight line with the normal of the cylindrical axis of the lens plate 40. FIG. 6A shows that the lens plate 40 is turned around the Y-axis by an angle θ (+θ) in the anticlockwise direction from the position shown in FIG. 6B.

Further, FIG. 6C shows that the lens plate 40 is turned around the Y-axis by an angle θ (-θ) in the clockwise direction from the position shown in FIG. 6B.

Here, in FIG. 5, the cylindrical convex lens array plate as the lens plate 40 can be rotatably supported by the X-axis rotary base 12 instead of the Y-axis rotary base 11. The rotary axes of the Y- and X-axis rotary bases 11 and 12 are placed so that they are parallel to the axis of each cylindrical lens of the cylindrical convex lens array plate.

Therefore, the recording operation which will be described below with reference to FIGS. 6A to 6C in the case where the lens plate 40 is rotatably supported by the Y-axis rotary base 11 is also applied to the case where the lens plate 40 is rotatably supported by the X-axis rotary base 12. Thus, explanation of the recording operation of the latter case is omitted.

In operation, the projector 30 in FIG. 5 is moved along the rails 9a and 9b to provide the distance L described already to form an image of a predetermined size on the lens plate 40. The lens plate 40 is then turned around the Y-axis by the Y-axis rotary base 11 to have the angle (+θ) as shown in FIG. 6A.

The projector 30 projects an image of an object on the lens plate 40 to record the image on the photosensitive storage medium 50 both positioned as shown in FIG. 6A. Here, the image of the object has been photographed by a monocular camera (not shown) fixed so that the optical lens of an imaging lens of the camera is positioned in a direction of the angle (+θ) from the front of the object.

The image can be projected by the projector 30 provided with an electrooptical displaying device such as an active matrix liquid crystal displaying device. In this case, the image of the object may not be a real one with three-dimensional shape and size but a three-dimensional image formed by computer graphics. And, image data corresponding to a plurality of images viewed from a plurality of directions are sent to the active matrix liquid crystal displaying device of the projector 30 and projected onto the lens plate 40.

The lens plate 40 positioned as shown in FIG. 6A is turned around the Y-axis by the Y-axis rotary base 11 in the clockwise direction to be in the position shown in FIG. 6C via the position shown in FIG. 6B. During this movement, images photographed by the monocular camera (not shown) are projected onto the lens plate 40 one by one per predetermined angle and recorded on the photosensitive storage medium 50 one by one.

The lens plate 40 positioned as shown in FIG. 6A allows an image projected onto the lens plate 40 and recorded on the photosensitive storage medium 50, which has been photographed by the monocular camera (not shown) fixed so that the optical axis of an imaging lens of the camera is positioned as rotated by the angle (+θ) from the front of an object to be photographed.

On the other hand, the lens plate 40 positioned as shown in FIG. 6C allows an image projected onto the lens plate 40 and recorded on the photosensitive storage medium 50, which has been photographed by the monocular camera (not shown) fixed so that the optical axis of the imaging lens of the camera is positioned as rotated by the angle (-θ) from the front of the object.

A stereoscopic image thus recorded as described above corresponds to an angle of field ψ in the range between the angles (+θ) and (-θ). The angle of field ψ is determined in accordance with the construction of the lens plate 40 with a plurality of aligned lenses. For example, the angle of field ψ = 30° provides 101 recorded images by photographing an object from directions different from each other by 0. 3 degrees; while 61 recorded images when the object is photographed from directions different from each other by 0. 5 degrees.

There are two stages in the recording operation when a bellow lens plate is used as the lens plate 40 instead of the cylindrical convex lens array plate.

The first stage is the same as that described with reference to FIGS. 6A to 6C in the case of the cylindrical convex lens array plate. More in detail, images photographed per predetermined angle Φ are projected onto the bellow lens plate as the lens plate 40 and recorded on the photosensitive storage medium 50 while the bellow lens plate is being turned around the Y-axis shown in FIG. 5 for every angle Φ.

Then, in the second stage, the images photographed per angle Φ are again projected onto the bellow lens plate and recorded on the photosensitive storage medium 50 while the bellow lens plate is being turned around the X-axis shown in FIG. 5 for every angle Φ.

Described below are conditions of a stereoscopic image recorded on the photosensitive storage medium 50 via the lens plate 40 (cylindrical convex lens array plate or bellow lens plate) without the aperture stop 7 shown in FIG. 5.

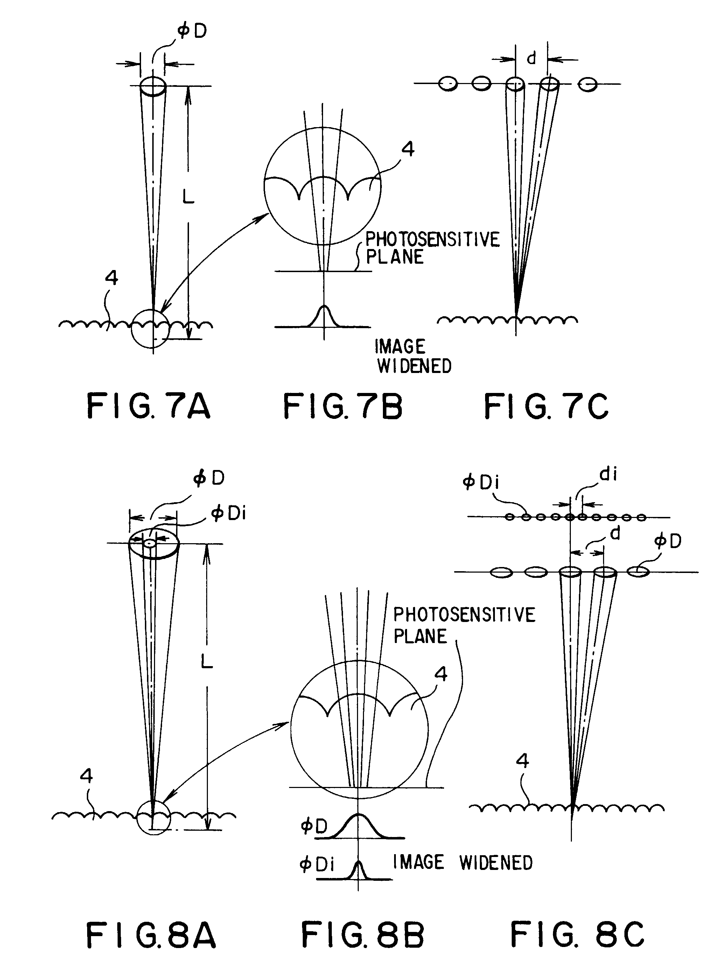

In FIG. 7A, an angular directivity β is expressed by

$$\beta = \Phi D/L \tag{1}$$

where ΦD denotes the effective aperture of the projecting lens system 6 of the projector 30 shown in FIG. 5, and L denotes a distance between the exit pupil of the projecting lens system 6 and the focal plane of the lens plate 40.

The expression (1) shows that the larger the effective aperture ΦD with a constant distance L, the larger the angular directivity β.

An angular directivity β causes a wide and dim stereoscopic image as shown in FIG. 7B that is an enlarged view of a part of the illustration of FIG. 7A because a divergence angle of beams from the projector 30 becomes wide. This results in a stereoscopic image exhibiting a low resolution.

On the other hand, the larger the distance L with a constant effective aperture ΦD, the smaller the angular directivity β. However, an original image cannot be reproduced if the distance L is different from a distance between the exit pupil of an imaging lens of a monocular camera and an object to be photographed.

In order to prevent the angular directivity β from becoming larger to minimum, a projector interval $\underline{d}$ shown in FIG. 7C and the effective aperture ΦD should have the relationship expressed by

$$d \geqq \Phi D \tag{2}$$

where the projector interval $\underline{d}$ represents the interval for recording between two projectors adjacent to each other such as the projectors 3a and 3b, and 3b and 3c shown in FIG. 1B or the travel distance of the single projector 3 shown in FIG. 3B.

Then, the maximum number N of recordable stereoscopic images is expressed by

$$N = ( \pi \cdot L \cdot \psi/180 \cdot d) + 1 \tag{3}$$

The expression (3) shows that the number N for preventing the angular directivity β from becoming larger to minimum depends on the effective aperture $\Phi_D$.

For example, the angle of field ψ = 30° , the distance L = 600 mm, the effective aperture $\Phi_D$ = 30 mm and the projector interval $\underline{d}$ = 30 mm provide N = 11 or 12 according to the expression (3). In this case, the lens plate 40 rotates for every 2. 7 degrees to obtain 11 or 12 stereoscopic images. However, this results in unnatural stereoscopic images with some missing portions. The stereoscopic images thus exhibit a low quality and resolution.

Now, described below is how the aperture stop 7 shown in FIG. 5 serves to record a natural stereoscopic image on the photosensitive storage medium 50 via the lens plate 40 (cylindrical convex lens array plate or bellow lens plate) according to the present invention.

As shown in FIG. 8A, the installation of the aperture stop 7 in the projecting lens system 6 of the projector 30 of FIG. 5 provides an effective aperture $\Phi_{Di}$ of the projecting lens system 6 that is smaller than $\Phi_D$ without an aperture stop as described with reference to FIGS. 7A to 7C.

The constant distance L and the effective aperture $\Phi_{Di}$ ($\Phi_{Di}/\Phi_D = 1/\alpha$) provide the angular directivity β expressed by the expression (1) being 1/α of the angular directivity with the effective aperture $\Phi_D$.

As shown in FIG. 8B that is an enlarged view of a part of the illustration of FIG. 8A, the aperture stop 7 serves to form a stereoscopic image not so wide compared with the case where the aperture stop is not provided. Because the aperture stop 7 produces narrow divergence angles of beams from the projector 30. This results in a stereoscopic image exhibiting a high resolution.

Therefore, as shown in FIG. 8C, compared with the projector interval $\underline{d}$ shown in FIG. 7C without aperture stop, a projector interval $\underline{di}$ in the case of the effective aperture $\Phi_{Di}$ ($\Phi_{Di}/\Phi_D = 1/\alpha$) with the aperture stop 7 can be set as follows:

$$di = d/\alpha$$

This results in recording of many natural stereoscopic images being possible without missing portions. And, hence the stereoscopic images exhibit a high quality and resolution.

As discussed above, a close relationship lies between the maximum number N of recordable images and the effective apertures $\Phi_D$ and $\Phi_{Di}$ of the projecting lens system 6 of the projector 30.

The effective aperture can be expressed as follows by modifying the expression (3):

$$\Phi_D (\Phi_{Di}) = \pi \cdot L \cdot \psi/180 \cdot N \tag{4}$$

For example, the angle of field ψ = 30° , the distance L = 600 mm and the maximum recordable number N = 101 provide the effective aperture $\Phi_{Di}$ about 3 mm according to the expression (4) and about 5 mm when N is 61.

As discussed above, the aperture stop 7 provides a small angular directivity β to record a stereoscopic image exhibiting a high resolution.

However, as shown in FIG. 9A, an effective aperture smaller than that obtained by the expression (4) will sometimes cause a stereoscopic image with recorded areas 5a and unrecorded areas 5b aligned with about a constant pitch.

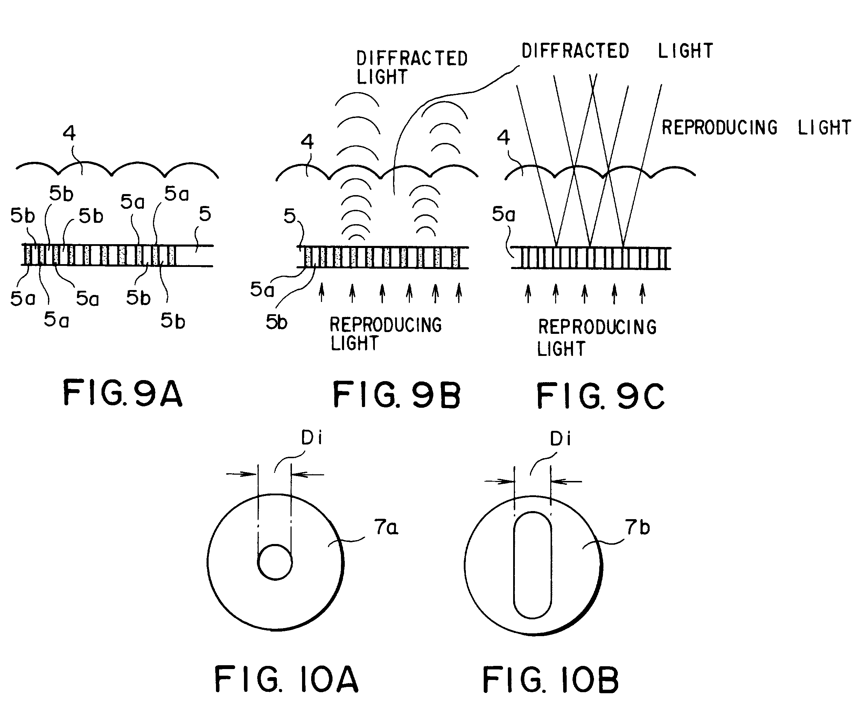

Therefore, beams of light irradiated for reproduction onto a photosensitive storage medium with a stereoscopic image recorded thereon in FIG. 9A will be diffracted as shown in FIG. 9B by the unrecorded areas 5b acting as slits.

The diffracted beams of light will then produce interference fringes, as well known, due to further diffraction caused by the lens pitch of a lens plate with a plurality of aligned lenses. This corresponds to diffraction caused by two slits. A stereoscopic image can be observed, however, with interference fringes. This results in a stereoscopic image exhibiting a low quality.

The stereoscopic image recording apparatus according to the present invention is therefore provided with the aperture stop 7 for adjusting the effective aperture $\Phi_{Di}$ of the projecting lens system 6 of the projector 30 so that the expression (4) is always established. This will produce a stereoscopic image with the recorded areas 5a only on the photosensitive storage medium as shown in FIG. 9C.

A variable aperture stop can adjust the effective aperture $\Phi_{Di}$ to an optimum value so as to establish the expression (4). Thus, the stereoscopic image recording apparatus with the variable aperture stop is capable of recording stereoscopic images exhibiting a high quality even from stereoscopic image data of different recording numbers.

FIG. 10A illustrates a circular aperture stop 7a with a diameter Di. And, FIG. 10B illustrates a long hole type aperture stop 7b with a length Di in its transversal direction and another length longer than Di in a direction parallel to the cylindrical axis of the cylindrical convex lens of the lens plate 40 in FIG. 5.

The circular aperture stop 7a can be applied in either case where the bellow lens plate or the cylindrical convex lens array plate is used as the lens plate 40. However, the long hole type aperture stop 7b can be applied only in the latter case.

Each lens of the bellow lens plate acts as a lens in every direction around the optical axis and hence a stereoscopic image is recorded also in a vertical direction of the lens plate. That is why the circular aperture stop 7a is only be used as an aperture stop provided in an optical path through which a light beam is emitted from the projector to the bellow lens plate.

On the other hand, each lens of the cylindrical convex lens array plate does not act as a lens in a direction of the cylindrical axis. That is why the long hole type aperture stop 7b can be used as an aperture stop provided in an optical path through which a light beam is emitted from the projector to the cylindrical convex lens array plate and in a direction parallel to the cylindrical axis of the cylindrical convex lens array.

The long hole type aperture stop 7b with a larger opening area than that of the circular aperture stop 7a allows a large amount of light to pass therethrough. The aperture stop 7b thus serves to form a bright stereoscopic image for a short recording time. Not only the shape as shown in FIG. 10B, the aperture stop 7b can have any shape with at least a long hole in a direction parallel to the cylindrical axis of the cylindrical convex lens array plate.

A stereoscopic image is a still image and its quality evaluation is mostly severer than that of a moving image. And, the quality has been evaluated to inspect the regurality of luminance distribution of an image. The regurality is a value mostly defined by a peripheral illuminance ratio of a projector. The peripheral illuminance ratio is a ratio of the peripheral illuminance to the illuminance at the center of an image. The larger the regurality, the more constant the brightness of a projected image.

An ordinary projector exhibits a peripheral illuminance ratio in the range of about 70% to 85%. And, a projector exhibiting the peripheral illuminance ratio of 85% or more is rare and very expensive. Further, the recent trend is to aim for high luminance of a projected image rather than the peripheral illuminance ratio for use of a projector in a bright room.

Projection of a plane image by a projector exhibiting a low peripheral illuminance ratio but a high luminance will rarely cause a problem. However, projection of a stereoscopic image by such a projector will produce an unnatural image bright at its center but dark at its peripheral sections.

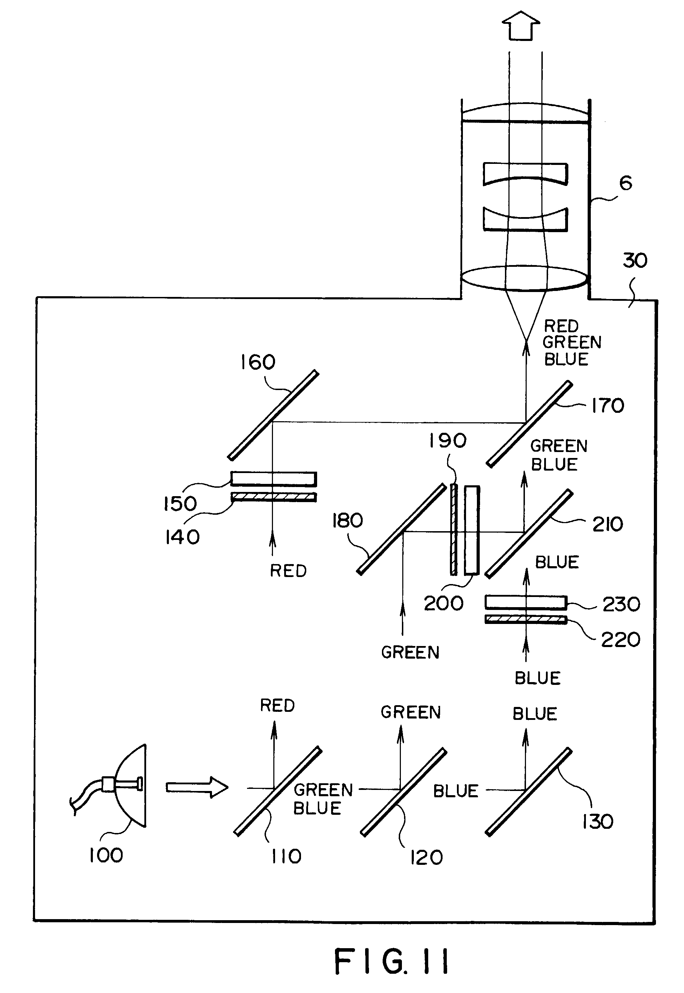

In order to solve the problem, the stereoscopic image recording apparatus according to the present invention is provided with at least one diffusion plate between a light source and the projecting system 6 of the projector 30 as shown in FIG. 11.

In FIG. 11, a light beam generated by a light source 100 is irradiated to a red reflecting mirror 110. Among the three primary colors carried by the light beam, a red light beam is reflected by the reflecting mirror 110 while green and blue light beams go therethrough and are irradiated to a green reflecting mirror 120. The green light beam is reflected by the reflecting mirror 120 while the blue light beam goes therethrough.

The red light beam goes through a liquid crystal panel 150 via a diffusion plate 140 and reflected by red reflecting mirrors 160 and 170. The green light beam is further reflected by a green reflecting mirror 180, goes through a liquid crystal panel 200 via a diffusion plate 190, reflected by a green reflecting mirror 210 and goes through the red reflecting mirror 170. And, the blue light beam is reflected by a blue reflecting mirror 130, goes through a liquid crystal panel 230 via a diffusion plate 220 and further goes through the green and red reflecting mirrors 210 and 170. The three light beams are then combined and irradiated to the projecting lens system 6.

The diffusion plates 140, 190 and 220 placed in front of the liquid crystal panels 150, 200 and 230, respectively, serve to provide an almost uniform peripheral illuminance ratio.

The diffusion plate however will cause decrease in amount of light irradiated to the image to be projected. This results in a dark projected image.

However, a purpose of the present invention is to achieve higher regurality of luminance distribution of a projected image. And, the diffusion plate can provide a peripheral illuminance ratio of 95% to record a stereoscopic image of high image quality. Furthermore, the decrease in amount of light discussed above due to the provision of the diffusion plate can be prevented by projecting an image to a photosensitive storage medium for a long time and using a high sensitive photosensitive storage medium, etc.

In order to reproduce a stereoscopic image from a photosensitive storage medium on which the stereoscopic image has been recorded by the stereoscopic image recording apparatus, the storage medium is attached on a lens plate for reproduction with the same construction as that of the lens plate 40 used for recording, and a reproducing light beam is irradiated to the storage medium.

However, as already discussed, difficulty lies in installation of the photosensitive storage medium on which the stereoscopic image has been recorded and the lens plate for reproduction under the accurate positional relationship. This problem will be more serious when many number of stereoscopic images have been recorded.

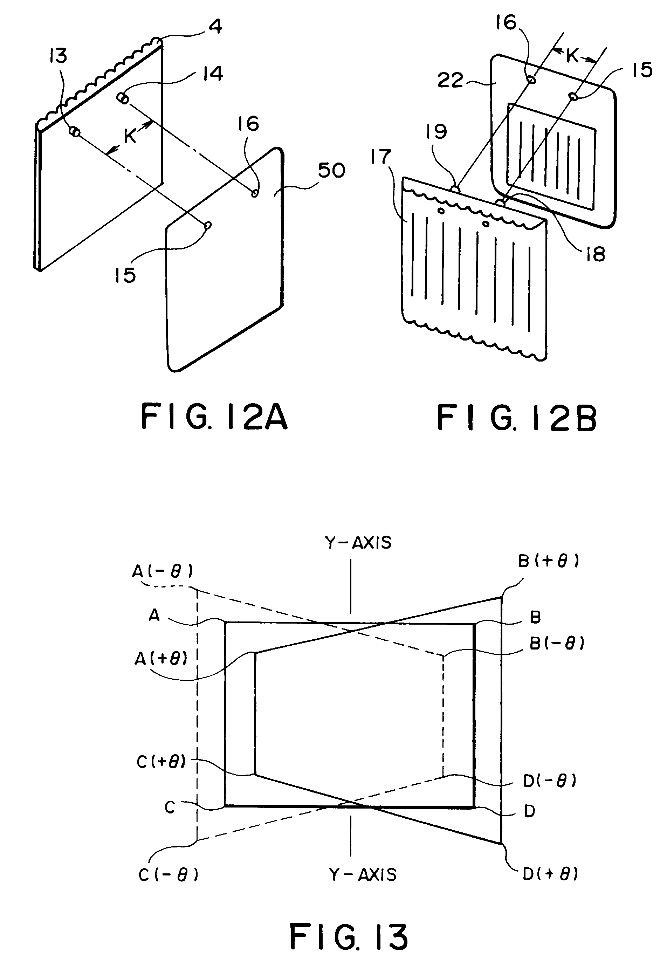

In order to solve the problem, the stereoscopic image recording apparatus of the present invention is provided with position restricting fittings as shown in FIGS. 12A and 12B.

The lens plate 40 for recording shown in FIG. 12A and a lens plate 17 for reproduction shown in FIG. 12B have the same construction as with each other.

Shown in FIG. 12A are protrusions 13 and 14 formed on the lens plate 40 at its end portions with a predetermined space K. Also shown in FIG. 12A are holes 15 and 16 formed on the photosensitive storage medium 50. The protrusions 13 and 14 are inserted into the holes 15 and 16, respectively, to firmly attach the storage medium 50 on the lens plate 40.

An image is projected by the projector 30 onto the photosensitive storage medium 50 shown in FIG. 12A to expose the medium 50 and a stereoscopic image is developed thereon. The image developed photosensitive storage medium 50 is shown in FIG. 12B as denoted by a reference numeral 22 with the same holes 15 and 16.

Also shown in FIG. 12B is a lens plate 17 with the same construction as that of the lens plate 40 shown in FIG. 12A. Protrusions 18 and 19 are formed on the lens plate 17 at its end portions with the space K. The locations of the protrusions 18 and 19 shown in FIG. 12B are the same as those of the protrusions 13 and 14 shown in FIG. 12A.

Therefore, the image developed photosensitive storage medium 22 can be attached on the lens plate 17 by inserting the protrusions 18 and 19 into the holes 15 and 16, respectively.

Further, forming the protrusions 13 and 14 on the lens plate 40 in such a way that a mid point of the space K is displaced from the center point in a transverse direction on the lens plate 40 serves to attach the storage medium 50 on the lens plate 40 with a correct front back relationship.

The stereoscopic image developed (recorded) on the photosensitive storage medium 22 shown in FIG. 12B can be observed by a stereoscopic image viewer. The stereoscopic image viewer is provided with a light source, a lens plate on which a storage medium is detachable and a diffusion plate positioned between the light source and the lens plate.

In operation, a light beam is irradiated onto the backside of the storage medium via the diffusion plate while the lens plate is rotating to reproduce the stereoscopic image on the front side of the storage medium. This allows an observer to view the images one by one recorded on the storage medium as if turning over pages of a book.

The stereoscopic image recording apparatus shown in FIG. 5 can also be used for recording a plurality of images other than stereoscopic images, such as sectional images each of which is a two-dimensional image taken out of a stereoscopic image.

However, as shown in FIGS 6A to 6C, distances between the front sections of the lens plate 40 and the projector 30 will vary while the lens plate 40 is rotating. Therefore, an image photographed out of perspective will have trapezoidal (keystone) distortion when recorded as a stereoscopic image.

For example, an image output from a medical instrument such as X-ray CT, MRI and ultrasonic sectional photographic equipment can be considered as an image photographed from a point at infinity. Then, the recording such image as described with reference to FIGS. 6A to 6C will cause trapezoidal distortion. The same is true in case of recording a plurality of two-dimensional images other than stereoscopic images.

The generation of the trapezoidal distortion will be discussed in detail with reference to FIG. 13.

In FIG. 13, a rectangle (A, B, D, and C) indicated by a thick solid line represents an image projected onto and recorded on the photosensitive storage medium 50 via the lens plate 40 in such a way that, as shown in FIG. 6B, the optical axis of the projecting lens 6 of the projector 30 agrees with, or forms a straight line with the normal of the cylindrical axis of the cylindrical convex lens array plate as the lens plate 40.

Further, a trapezoid {A($-\theta$), B($-\theta$), D($-\theta$) and C($-\theta$)} indicated by a broken line in FIG. 13 represents an image projected onto and recorded on the photosensitive storage medium 50 via the lens plate 40 in such a way that, as shown in FIG. 6C, the lens plate 40 rotates by the angle ($-\theta$) from the position shown in FIG. 6B and hence the optical axis of the projecting lens 6 of the projector 30 is displaced by the angle ($-\theta$) from the normal of the cylindrical axis of the cylindrical convex lens array plate as the lens plate 40.

Furthermore, a trapezoid {A($+\theta$), B($+\theta$), D($+\theta$) and C($+\theta$)} indicated by a thin solid line in FIG. 13 represents an image projected onto and recorded on the photosensitive storage medium 50 via the lens plate 40 in such a way that, as shown in FIG. 6A, the lens plate 40 rotates by the angle ($+\theta$) from the position shown in FIG. 6B and hence the optical axis of the projecting lens 6 of the projector 30 is displaced by the angle ($+\theta$) from the normal of the cylindrical axis of the cylindrical convex lens array plate as the lens plate 40.

The above description with reference to FIG. 13 shows that an image photographed out of perspective will have trapezoidal distortion when recorded as a stereoscopic image.

The trapezoidal distortion will also occur in the chase where an image is projected onto a screen from an ordinary projector under the condition that the optical axis of an imaging lens of the projector does not agree with, or form a straight line with the normal of the screen.

Provision of a projector under the condition that the optical axis of an imaging lens of the projector agrees with, or forms a straight line with the normal of the center of a screen will not cause such trapezoidal distortion in a projected image. However, such provision of the projector in front of the screen will sometimes be an obstacle to an observer to observe the image. There have been projectors with optical means to solve the trapezoidal distortion problem, however, they are expensive.

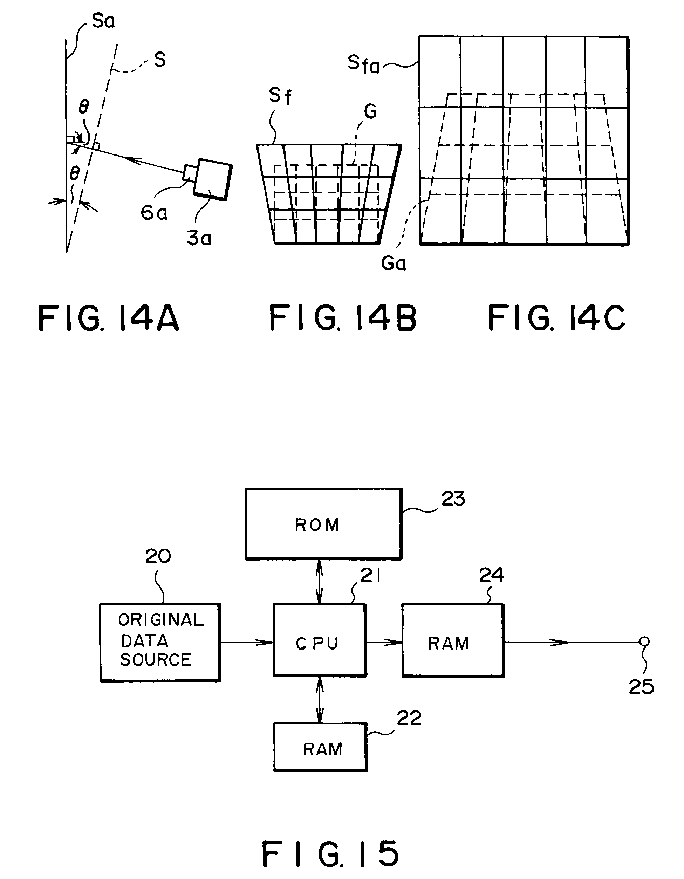

A method of previously applying reverse distortion to an image to be projected will be explained with reference FIGS. 14A to 14C.

A screen S indicated by a broken line in FIG. 14A is located under the condition that the normal of the screen S agrees with, or forms a straight line with the optical axis of a projecting lens 6a of a projector 3a. On the other hand, a screen Sa indicated by a solid line in FIG. 14A is located under the condition that the normal of the screen Sa is inclined by an angle $\theta$ from the optical axis of the projecting lens 6a.

Next, a rectangle image frame G indicated by a broken line in FIG. 14B represents an image frame of an image to be projected. An image frame of an image which will be projected onto the screen S will bear a close resemblance to the image frame G. On the other hand, a trapezoidal image frame Sf in FIG. 14B represents an image frame of an image with trapezoidal distortion projected onto the screen Sa by the projector 3a with the projecting lens 6a having the angle $\theta$ in the vertical direction. The trapezoidal distortion will vary in accordance with variation of the angle $\theta$ between the optical axis of the projecting lens 6a and the normal of the screen Sa.

In order to prevent an image projected onto the screen Sa from generation of the trapezoidal distortion, or to have an image projected onto the screen Sa, which is identical to an original image, such original image may be previously applied distortion which is the exact opposite of the trapezoidal distortion which would affect a projected image.

A trapezoidal image frame Ga indicated by a broken line in FIG. 14C is an image frame of an original image previously deformed by the distortion the exact opposite of the trapezoidal distortion which would affect a projected image in order to have a projected image identical to the original image but without trapezoidal distortion. A deformed image with the image frame Ga projected onto the screen Sa will produce an image thereon with a rectangle image frame Sfa as shown in FIG. 14C.

However, the method described above with reference to FIGS. 14A to 14C should be conducted under the condition that the distance between the screen Sa and the projector 3a is always constant.

Therefore, this method cannot be applied to the stereoscopic image recording apparatus shown in FIG. 5 because, as shown in FIGS 6A to 6C, distances between the front sections of the lens plate 40 and the projector 30 will vary while the lens plate 40 is rotating. [0035]

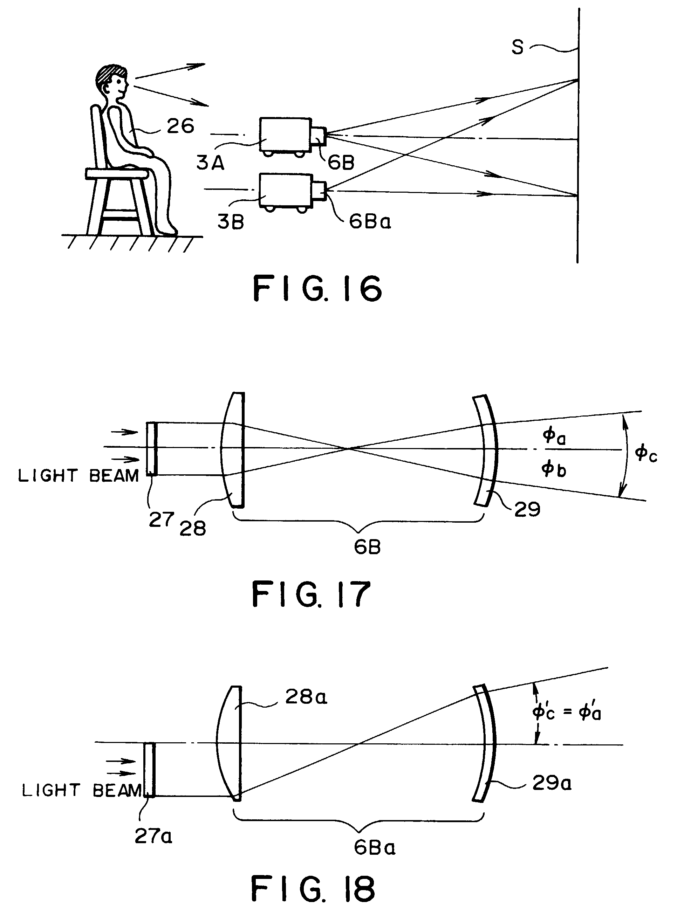

In order to solve the problem, the present invention provides a deformed image data generator as shown in FIG. 15.

The deformed image data generator is provided with an original image data source 20 as shown in FIG. 15. Each original image data has a rectangle image frame of an aspect ratio such as 4 : 3. The data source 20 generates image data of any mode such as image data of (640 x 480) pels in VGA mode, (800 x 600) pels in SVGA mode and (1024 x 768) pels in XGA mode.

The deformed image data generator is further provided with a central processing unit (CPU) 21, RAMs 22 and 24, and a ROM 23 that stores a deformed (trapezoidal) image data processing program.

The deformed image data processing program is supplied from the ROM 23 to the CPU 21. And, the original image data are supplied from the data source 20 to the CPU image data are supplied from the data source 20 to the CPU 21 through an online network (not shown) or offline in the case where the data source 20 is a storage medium. The original data are once stored in the RAM 22 from the CPU 21.

The CPU 21 executes the deformed image data processing program to process the original data stored in the RAM 22 to generate deformed (trapezoidal) image data. The generated data correspond to original images which have previously been deformed by trapezoidal distortion the exact opposite of trapezoidal distortion which would affect images to be projected.

The generated deformed image data are stored in the RAM 24. The data are read from the RAM 24 and sent via a terminal 25 to a displaying device such as an active matrix liquid crystal displaying device installed in the projector 30 of the stereoscopic image recording apparatus shown in FIG. 5. The deformed image data are different from each other so as to correspond to different images to be projected.

In consideration of images to be projected, provision of a projector 3A in sight of an observer 26 as shown in FIG. 16 will be obstacle for the observer to observation. It is well known, as shown in FIG. 14A, to avoid this, to set the projector 3a outside the sight of an observer under the condition that the optical axis of a projecting lens system of the projector is inclined by the angle θ from the normal of the screen Sa.

In the cases where the projectors 3a and 3A are set as shown in FIGS. 14A and 16, respectively, the optical axis of a projecting lens system 6B with lenses 28 and 29 as shown in FIG. 17 is located at the center of an image projected from an image displaying device 27 of the projector so that an elevation angle θa and a depression angle θb of a vertical angle of view θc are equal to each other. Provision of the projectors as shown in FIGS. 14A and 16 will cause the trapezoidal distortion as discussed above.

There is a projector proposed recently as shown in FIG. 18. The optical axis of a projecting lens system 6Ba with lenses 28a and 29a as shown in FIG. 18 is located on one end of an image projected from an image displaying device 27a of the projector so that an elevation angle θa' equals a vertical angle of view θc' with a depression angle θb of zero.

Using the projecting lens system 6Ba, an image can be projected onto the screen S without trapezoidal distortion even if a projector 3B with the lens system 6Ba is set out of sight of the observer 26 as shown in FIG. 16.

The deformed original image to be stored in the RAM 24 shown in FIG. 15 will be changed according to whether the projector 3A with the projecting lens system 6B shown in FIG. 17 or the projector 3B with the projecting lens system 6Ba shown in FIG. 18 is used.

The principle of generating the deformed (trapezoidal) original image data with the projecting system 6B shown in FIG. 17 will be discussed in detail.

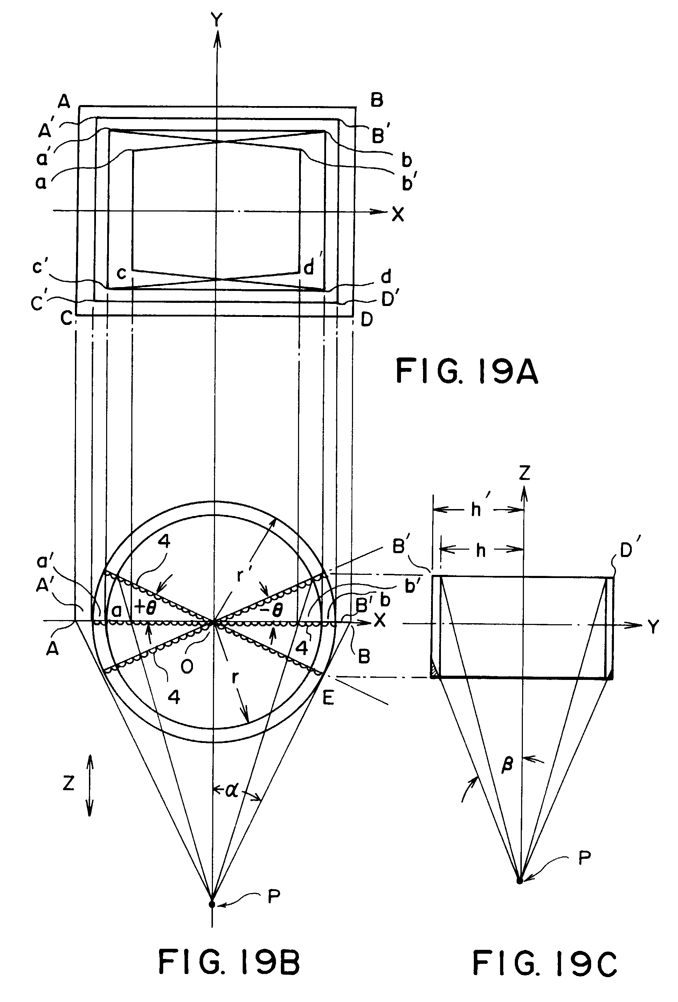

FIG. 19B is a top plan view of the cylindrical convex lens array plate as the lens plate 40. In FIG. 19B, a reference sign P denotes the location of the exit pupil of the projecting lens system 6B of the projector 3A; a reference sign O the rotary center of the lens plate 40 located on the Y-axis; a reference sign θ a rotary angle of the lens plate 40; a reference sign $\underline{r}$ a radius of a circular locus of the lens plate 40 turned around the Y-axis; and a reference sign r' a radius of a circular locus of the outer periphery of a reduced image projected onto the lens plate 40 while rotating.

An rectangle (A, B, D and C) shown in FIG. 19A represents an image frame of an image on the basis of a horizontal angle of view 2α and a vertical angle of view 2β of the projector 3A shown in FIG. 19B and projected onto the XY plane.

An rectangle (A', B', D' and C') also shown in FIG. 19A represents an image frame of an image projected from the projector 3A onto the lens plate 40 located on the XY plane.

A trapezoid (a, b, d and c) further shown in FIG. 19A represents an image frame of an image projected from the projector 3A while the lens plate 40 is rotating by angle (-θ) in an unticlockwise direction from the XY plane. On the other hand, a trapezoid (a', b', d' and c') shown in FIG. 19A is the exact opposite of the trapezoid (a, b, d and c) with respect to the Y-axis.

Further, an rectangle (a', b, d and c') shown in FIG. 19A represents an image frame of a reduced image projected from the projector 3A onto the lens plate 40 located on the XY plane.

FIG. 19C is a side view of the lens plate 40 shown in FIG. 19B. In FIG. 19C, a reference sign β denotes a vertical half angle of view of 2β; a reference sign h' the height of the lens plate 40; and a reference sign $\underline{h}$ the height of an image frame of a reduced image projected from the projector 3A onto the lens plate 40.

FIGS. 19A to 19C show that an image of height $\underline{h}$ is projected with no missing onto the lens plate 40 while rotating as described with reference to FIGS. 6A to 6C even if a portion of the lens plate of height h' goes beyond the vertical angle of view 2β of the projector 3A.

The image projected onto the lens plate 40 located on the XY plane is thus not an image with the image frame of the rectangle (A', B', D' and C') but an image with the height $\underline{h}$ of the rectangle (a', b, d and c') which is a reduced image of the image with the image frame of the rectangle (A', B', D' and C').

The reverse trapezoid (a', b', d' and c') is therefore obtained for trapezoidal distortion cancelling on the basis of the image frame of the rectangle (a', b, d and c') formed when the lens plate 40 rotates on the XY plane.

The values $\underline{r}$ and $\underline{h}$, and coordinate values of the points a', b', c' and d' on the screen are obtained as follows when the horizontal and vertical resolutions are 2m and 2n, respectively, where a'x, b'x, c'x and d'x are X-axis coordinate values of points a', b', c' and d', respectively, on the screen, and a'y, b'y, c'y and d'y are Y-axis coordinate values of points a', b', c' and d', respectively, on the screen:

$$r = m/(1 + \sin\theta_{max} \cdot \tan\alpha), \quad h = r \cdot n/m$$
$$a'x = -\{m \cdot r\cos\theta/(m + r\sin\theta \cdot \tan\alpha)\} + m - 1$$
$$a'y = n - m \cdot h/(m + r\sin\theta \cdot \tan\alpha)$$

b'x = {m · rcosθ/(m - rsinθ · tanα)} + m - 1
b'y = n - m · h/(m - rsinθ · tanα)
c'x = - {m · rcosθ/(m + rsinθ · tanα)} + m - 1
c'y = n + m · h/(m + rsinθ · tanα) - 1
d'x = {m · rcosθ/(m - rsinθ · tanα)} + m - 1
d'y = n + m · h/(m - rsinθ · tanα) - 1

As an example, the stereoscopic image recording apparatus shown in FIG. 5 with $\theta$ = - 15° $\sim$ + 15° and $\alpha$ = 13. 135° provides

r = 0. 943·m, h = 0. 943·n

from the expressions listed above and produces a 94. 3% reduced image of the rectangle (a', b, d and c') with respect to the rectangle (A, B, D and C). The values $\underline{m}$ and $\underline{n}$ in VGA mode of (640 x 480) pels are m = 320 and n = 240 with the coordinate values as listed in TABLE 1.

TABLE 1

| | a'x, | a'y | b'x, | b'y | c'x, | c'y | d'x, | d'y |
|---|---|---|---|---|---|---|---|---|
| $\theta$ = - 15 | 10, | 0 | 595, | 26 | 10, | 479 | 596, | 453 |
| $\theta$ = 0° | 17, | 14 | 621, | 14 | 17, | 465 | 621, | 65 |
| $\theta$ = + 15° | 43, | 26 | 628, | 0 | 43, | 453 | 628, | 479 |

Next, the principle of generating the deformed original image data with the projecting system 6Ba shown in FIG. 18 will be discussed in detail.

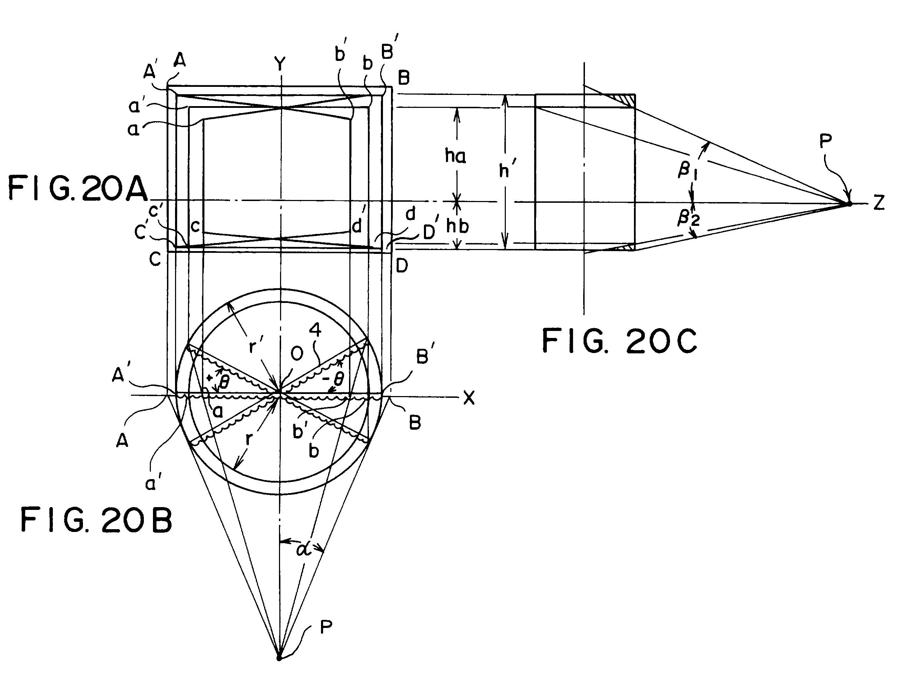

FIG. 20B is a top plan view of the cylindrical convex lens array plate as the lens plate 40 identical to that shown in FIG. 19B. No explanation of FIG. 20B is thus needed.

A trapezoid (a, B', D' and c) shown in FIG. 20A represents an image frame of an image projected from the projector 3B while the lens plate 40 is rotating by an angle (-θ) in an unticlockwise direction from the XY plane.

A trapezoid (A', b', d' and C') shown in FIG. 20A is the exact opposite of the trapezoid (a, B', D' and c) with respect to the Y-axis.

Further, an rectangle (a', b, d and c') shown in FIG. 20A represents an image frame of a reduced image projected from the projector 3B onto the lens plate 40 located on the XY plane.

FIG. 20C is a side view of the lens plate 40 shown in FIG. 20B. In FIG. 20B, reference signs β1 and β2 denote an elevation angle and a depression angle, respectively, of a vertical angle of view of the projector 3B; a reference sign h' the height of the lens plate 40; and reference signs ha and hb the heights in the elevation angle side and in the depression angle side, respectively, of an image frame of a reduced image projected from the projector 3B onto the lens plate 40.

FIGS. 20A to 20C show that an image of height (ha + hb) is projected with no missing onto the lens plate 40 while rotating as described with reference to FIGS. 6A to 6C even if a portion of the lens plate 40 of height h' goes beyond the elevation and depression angles β1 and β2 of the projector 3B.

The image projected onto the lens plate 40 located on the XY plane is thus not an image with the image frame of the rectangle (A', B', D' and C') but an image with the height (ha + hb) of the rectangle (a', b, d and c') which is a reduced image of the image with the image frame of the rectangle (A', B', D' and C').

The reverse trapezoid (A', b', d' and C') is therefore obtained for trapezoidal distortion cancelling on the basis of the image frame of the rectangle (a', b, d and c') formed when the lens plate 40 rotates on the XY plane.

The values $\underline{r}$ and $\underline{h}$, and coordinate values of the points A', b', C' and d' on the screen are obtained as follows when the horizontal and vertical resolutions are 2m and 2n, respectively, where A'x, b'x, C'x and d'x are X-axis coordinate values of points A', b', C' and d', respectively, on the screen, and A'y, b'y, C'y and d'y are Y-axis coordinate values of points A', b', C' and d', respectively, on the screen:

r = m/(1 + sinθmax·tanα ), h = r·n/m
A'x = - {m·rcosθ/(m + rsinθ·tanα)} + m - 1
A'y = r·m·tanβ1/(sinθmax + sinθ)/(m + rsinθ · tanα)
b'x = {m·rcosθ/(m - rsinθ·tanα)} + m - 1
b'y = r·m·tanβ1/(sinθmax - sinθ)/(m - rsinθ · tanα)

$$c'x = - \{m \cdot r\cos\theta/(m + r\sin\theta \cdot \tan\alpha)\} + m - 1$$
$$c'y = m(r\tan\beta1 \cdot \sin\theta + 2n - r\tan\beta2 \cdot \sin\theta max)/(m + r\sin\theta \cdot \tan\alpha) - 1$$
$$d'x = \{m \cdot r\cos\theta/(m - r\sin\theta \cdot \tan\alpha)\} + m - 1$$
$$d'y = m(-\tan\beta1 \cdot r\sin\theta + 2n - r\tan\beta2 \cdot \sin\theta max)/(m - r\sin\theta \cdot \tan\alpha) - 1$$

As an example, the stereoscopic image recording apparatus shown in FIG. 5 with $\theta = -15° \sim +15°$, $\alpha = 13.135°$ and the vertical elevation and depression angles $\beta1 = \beta2 = 9.925°$, which is equal to the half of the vertical angle of view $2\beta$ shown in FIG. 19C, provides

$$r = 0.943 \cdot m, \quad h = 0.943 \cdot n$$

from the expressions listed above and produces a 94. 3% reduced image of the rectangle (A', b, d and C') with respect to the rectangle (A, B, D and C). The values $\underline{m}$ and $\underline{n}$ in VGA mode of (640 x 480) pels are m = 320 and n = 240 with the same coordinate values listed in TABLE 1.

As another example, the stereoscopic image recording apparatus shown in FIG. 5 with $\theta = -15° \sim +15°$, $\alpha = 13.135°$, the vertical elevation angle $\beta1 = 13°$ and the depression angle $\beta2 = 6.85°$ provides coordinate values as listed in TABLE 2 on the points A', b', C' and d' from the expressions listed above.

TABLE 2

|  | A'x, | A'y | b'x, | b'y | C'x, | C'y | d'x, | d'y |
|---|---|---|---|---|---|---|---|---|
| $\theta = -15°$ | 10, | 0 | 595, | 34 | 10, | 479 | 595, | 461 |
| $\theta = 0°$ | 17, | 18 | 621, | 18 | 17, | 470 | 621, | 470 |
| $\theta = +15°$ | 43, | 34 | 628, | 0 | 43, | 461 | 628, | 479 |

As still another example, the stereoscopic image recording apparatus shown in FIG. 5 with $\theta = -15° \sim +15°$, $\alpha = 13.135°$, the vertical elevation angle $\beta1 = 19.85°$ and the depression angle $\beta2 = 0°$ provides coordinate values as listed in TABLE 3 on the points A', b', C' and d' from the expressions listed above.

TABLE 3

|  | A'x, | A'y | b'x, | b'y | C'x, | C'y | d'x, | d'y |
|---|---|---|---|---|---|---|---|---|
| $\theta = -15°$ | 10, | 0 | 595, | 53 | 10, | 479 | 595, | 479 |
| $\theta = 0°$ | 17, | 28 | 621, | 28 | 17, | 479 | 621, | 479 |
| $\theta = +15°$ | 43, | 53 | 628, | 0 | 43, | 479 | 628, | 479 |

Described below is the case where a reduced image is projected onto and displayed on any location in the Y-axis direction in a projecting angel of view of the projector 30B shown in FIG. 16.

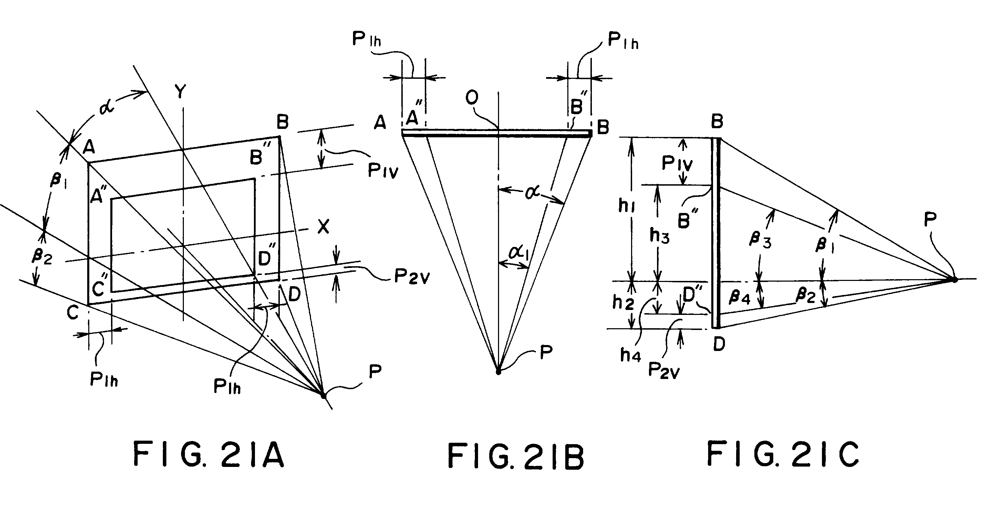

FIG. 21A shows that a reduced image is projected onto the lens plate 40 in the Y-axis direction in a projecting angel of view of the projector 3B. A rectangle (A, B, D and C) shown in FIG. 21A that is an image frame of a projected image is identical to the rectangle (A, B, D and C) shown in FIG. 20A. A rectangle (A", B", D" and C") shown inside the rectangle (A, B, D and C) of FIG. 21A represents an image area.

In the X-axis (horizontal angle of view) direction, a distance between a side AC of the rectangle (A, B, D and C) and a side A"C" of the rectangle (A", B", D" and C") is Plh, and a distance between a side BD of the rectangle (A, B, D and C) and a side B"D" of the rectangle (A", B", D" and C") is also P1h.

Further, in the Y-axis (vertical angle of view) direction, a distance between a side AB of the rectangle (A, B, D and C) and a side A"B" of the rectangle (A", B", D" and C"), or the distance therebetween in the elevation angle side is P1v, and a distance between a side CD of the rectangle (A, B, D and C) and a side C"D" of the rectangle (A", B", D" and C"), or the distance therebetween in the depression angle side is P2v.

FIG. 21B is a top plan view which shows an angle $\alpha1$ between the projected image center and an end of the image area (A", B", D" and C") in its horizontal direction with respect to a horizontal half angle of view $\alpha$ of a projecting angle of view.

FIG. 21C is a side view which shows an angle $\beta3$ between an exit pupil P' center of the projecting lens system 6Ba shown in FIG. 18 and an end of the image area (A", B", D" and C") in the elevation angle side of the vertical angle of view, and an angle $\beta4$ between the exit pupil P' center of the projecting lens system 6Ba and an end of the image area (A", B", D" and C") in the depression angle side of the vertical angle of view.

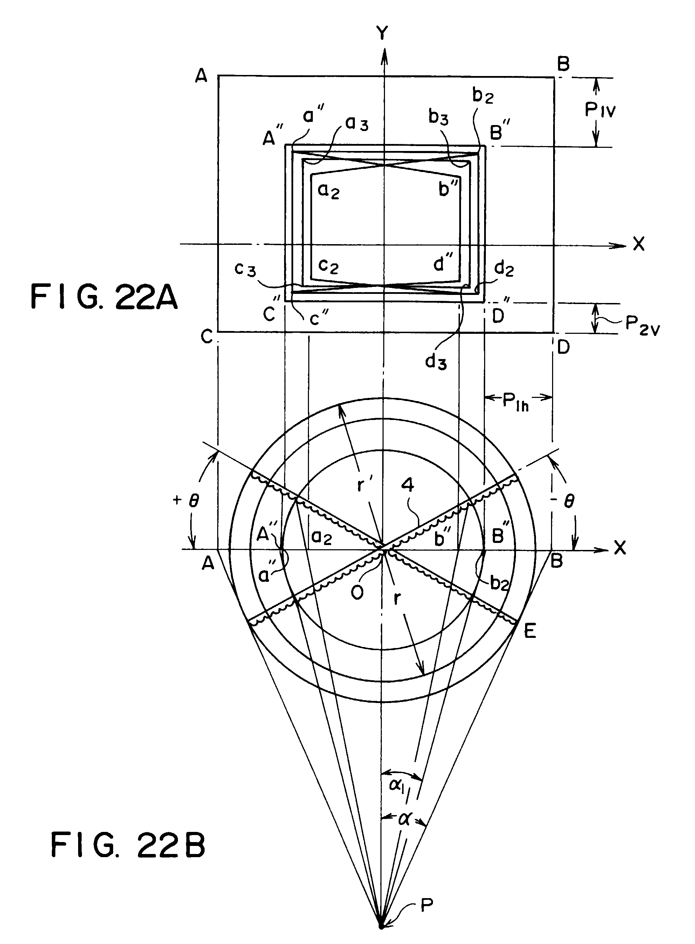

A reverse trapezoid to be used for trapezoidal distortion cancelling in the stereoscopic image recording described with respect to FIGS. 21A to 21C can be obtained as described below with reference to FIGS. 22A and 22B. The principle of obtaining the reverse trapezoid is almost the same as the reverse trapezoid (A', b', C' and d') obtained as described with reference to FIGS. 20A to 20C.

FIG. 22B is a top plan view of the cylindrical convex lens array plate as the lens plate 40 used in the stereoscopic image recording described with respect to FIGS. 21A to 21C.

In FIG. 22B, a reference sign P denotes the location of the exit pupil of the projecting lens system 6Ba of the projector 3B; a reference sign O the rotary center of the lens plate 40 located on the Y-axis; and a reference sign $\theta$ a rotary angle of the lens plate 40. The lens plate 40 will rotate in the range between (-$\theta$) and (+$\theta$).

Further, in FIG. 22B, a reference sign $\underline{r}$ a radius of a circular locus of the lens plate 40 turning around the Y-axis; and a reference sign r' a radius of a circular locus of the outer periphery of a reduced image projected onto the lens plate 40 while rotating.

An image frame (A, B, D and C) shown in FIG. 22A corresponding to that shown in FIG 21A represents an image frame of an image projected onto the lens plate 40 which is located on the XY plane ($\theta$ = 0). Further, an image frame (A", B", D" and C") shown in FIG. 22A corresponding to that shown in FIG. 21A is defined by angles of view $\alpha 1$, $\beta 3$ and $\beta 4$ obtained from angels of view $\alpha$, $\beta 1$, $\beta 2$, Pv1, Pv2 and Ph1.

Therefore, change in the image frame (A", B", D" and C"), or shapes of a trapezoid and a reverse trapezoid shown in FIG. 22A is equal to that projected by a projector with angles of view $\alpha 1$, $\beta 3$ and $\beta 4$. This can be understood from the description with reference to FIGS. 19A to 20C.

A reverse trapezoid (a", b", d" and c") for an image projected onto the lens plate 40 located as represented by the image frame (A", B", D" and C") is thus obtained on the basis of a projected image with an image frame (a3, b3, d3 and c3) which is a reduced image of an image frame (a", b2, d2 and c").

Here, an image of a predetermined size and with the image frame (A", B", D" and C") on the lens plate 40 located on the XY plane has the horizontal and vertical resolutions 2m2 and 2n2, respectively, and the horizontal and vertical resolutions of an image to be projected are 2m and 2n, respectively.

An horizontal angle $\alpha 1$ shown in FIG. 22B between the center of a projected image and an end of the projected image in the X axis direction is obtained by a horizontal half angle of View $\alpha$. Further, the distance L between the rotary center O of the lens plate 40 and the exit pupil P of the projecting lens system 6Ba of the projector 3B shown in FIG. 18 is obtained as L = m/tan$\alpha$. The angle $\alpha 1$ is thus obtained as tan$\alpha 1$ = m2/L.

Further, a height hl shown in FIG. 21C of a projected image decided by the distance L and an elevating angle $\beta 1$ of a vertical angle of view of the projected image is obtained as h1 = L · tan$\beta 1$. And, another height h3 shown in FIG. 21C is obtained by subtracting a distance P1v at the elevating angle side of the vertical angle of view from the height h1, that is, h3 = h1 - P1v.

An angle $\beta 3$ shown in FIG. 21C between the center P and an end of the projected image in the elevating angle direction of the vertical angle of view is therefore obtained on the basis of the relationship tan$\beta 3$ = h3/L.

Further, angle $\beta 4$ shown in FIG. 21C between the center P and an end of the projected image in the depression angle direction of the vertical angle of view is obtained on the basis of the relationships h2 = L·tan $\beta 2$, h4 = h2 - P2V and tan$\beta 4$ = h4/L. And, the radius r of a circular locus of the lens plate 40 turning around the Y-axis is obtained as r = m2/(1 + sin$\theta$max·tan$\alpha$).

Therefore, in the stereoscopic image recording described with reference to FIGS. 21A to 21C, coordinate values of the points on the screen of the reverse trapezoid a", b", d" and c" for trapezoidal distortion cancelling while the lens plate 40 is rotating on the XY plane are obtained as follows when the horizontal and vertical resolutions are 2m and 2n, respectively, where a"x, b"x, c"x and d"x are X-axis coordinate values of points a", b", c" and d", respectively, on the screen, and a"y, b"y, c"y and d"y are Y-axis coordinate values of points a", b", c" and d", respectively, on the screen:

a"x = - {m2·rcos$\theta$/(m2 + rsin$\theta$ · tan$\alpha 1$)} + m - 1 + P1h
a"y = r·m2·tan$\beta 3$(sin$\theta$max + sin$\theta$)/(m2 + rsin$\theta$ · tan$\alpha 1$) + P1h
b"x = {m2·rcos$\theta$/(m2 - rsin$\theta$ · tan$\alpha 1$)} + m2 - 1 + P1h
b"y = r·m2·tan$\beta 1$(sin$\theta$max - sin$\theta$)/(m - rsin$\theta$ · tan$\alpha 1$) + P1h
c"x = - {m2 · rcos$\theta$/(m2 + rsin$\theta$ · tan$\alpha 1$)} + m2 - 1 + P1h
c"y = m2(rtan$\beta 1$ · sin$\theta$ + 2n2 - rtan$\beta 2$ · sin$\theta$max)/(m + rsin$\theta$ · tan$\alpha$) - 1 + P1h
d"x = - (m2·rcos$\theta$/(m2 - rsin$\theta$ · tan$\alpha 1$)} + m2 - 1 + P1h
d"y = m2(-tan$\beta 1$·rsin$\theta$ + 2n2 - rtan$\beta 2$·sin$\theta$max)/ (m2 - rsin$\theta$·tan$\alpha 1$) - 1 + P1h

As an example, the stereoscopic image recording described with reference to FIGS. 21A to 21C with $\theta$ = - 15° $\sim$ + 15° , $\alpha$ = 16. 172° , the elevation angle $\beta 1$ = 23. 268° and the depression angle $\beta 2$ = 0° of the vertical angle of view provides m = 400, n = 300, m2 = 320, n2 = 240 and P1h = 40 in VGA mode of (640 x 480) pels. Here, P1V = 60 when a lower end of an image emitted from the projector and a lower end of a projected image are located on the same plane. The coordinate values in this case obtained from the expressions above are listed in TABLE 4.

TABLE 4

|  | a"x, | a"y | b"x, | b"y | c"x, | c"y | d"x, | d"y |
|---|---|---|---|---|---|---|---|---|
| θ = - 15° | 90, | 120 | 675, | 171 | 90, | 599 | 675, | 599 |
| θ = 0° | 97, | 147 | 701, | 147 | 97, | 599 | 701, | 599 |
| θ = +15° | 123, | 171 | 708, | 120 | 123, | 599 | 708, | 599 |

The deformed (trapezoidal) image data processing program stored in the ROM 23 of FIG. 15 is composed on the basis of the principles of generating the deformed original image data described above.

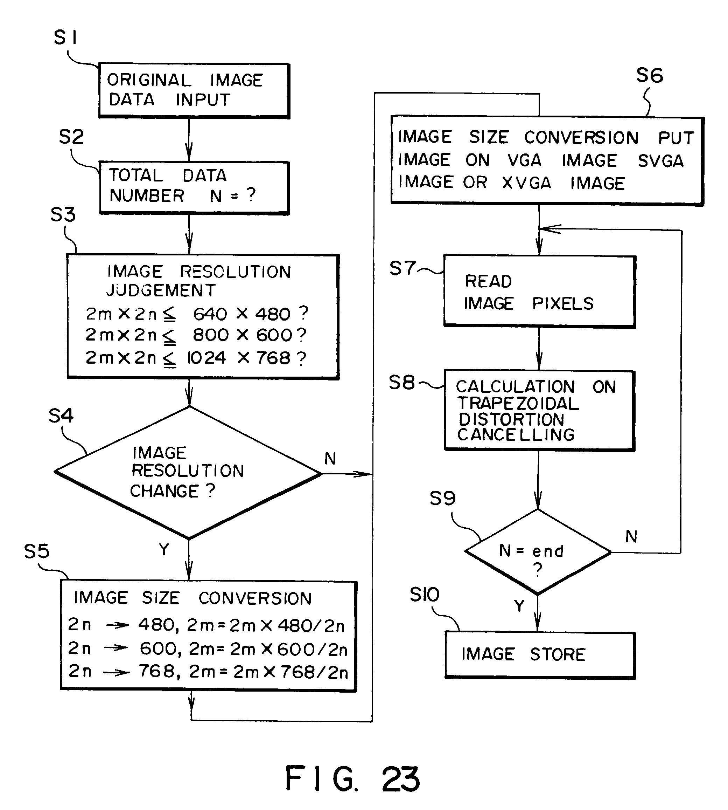

Now, the operation of the deformed image data generator shown in Fig. 15 will be described in detail with reference to the flowchart shown in FIG. 23.

In STEP S1 shown in FIG. 23, the original image data to be projected are supplied from the original image data source 20 to the RAM 22 via the CPU 21. Next, in STEP S2, the CPU 21 detects the total number N of images of the stored original image data to calculate the rotary angle θ of the lens plate 40, which is the parameter of the expressions described above.

Next, in STEP S3, image resolution (2m x 2n) pels of the original image data is detected. In detail, judgement is made as to whether the image resolution 2m x 2n (pixel) of the original image data is the same as or smaller than (680 x 480) pels in VGA; greater than (680 x 480) pels in VGA and the same as or smaller then (800 x 600) pels in SVGA; or greater than (800 x 600) pels in SVGA and the same as or smaller than (1024 x 768) pels in XGA. The judgement in modes other than VGA, SVGA and XGA can be adopted in STEP S3.

Next, in STEP S4, judgement is further made as to whether the original image resolution should be changed. If the judgement in STEP S3 shows that the original image resolution equals to that in any one of VGA, SVGA and XGA modes, the process goes to STEP S6 with no resolution change.

On the other hand, if the judgement in STEP S3 shows that original image resolution is smaller than that in VGA mode, between those in VGA and SVGA modes or between those SVGA and XGA modes, the process goes to STEP S5 with resolution change (image size conversion.)

For example, original image data with images of (256 x 256) or (512 x 512) pels cannot be projected by a projector in any of the VGA, SVGA and XVGA modes. In such a case, the images of the original image data are magnified or reduced to be images suitable for the VGA, SVGA or XVGA mode.

The image size conversion in STEP S5 magnifies or reduces images with constant aspect ratio of the original images. Further, this image size conversion changes the resolution of the original images so as to be suitable for the VGA, SVGA or XVGA mode.

On the other hand, image size conversion in STEP S6 converts images to ones suitable for the VGA, SVGA or XVGA mode in such a way that an image the size of which has been converted in STEP S5 or an image with no size conversion in STEP S4 is put on a black image in the VGA, SVGA or XVGA mode under the condition that the center of the image processed in STEP S4 or S5 matches that of the black image.

The process goes to STEP S7 where the pixels of images processed in STEP S6 are sequentially read per image and in STEP S8, the calculations on the trapezoidal distortion cancelling described above are carried out with sequential conversion of the pixels on the coordinates of the screen.

Next, in STEP S9, if the number of the images processed in STEP S8 reaches N, the pixels converted on the coordinates of the screen are stored in the RAM 24 and the process ends in STEP S10. If not, the process goes back to STEP S7.

The deformed original image data generation described above are suitable for image recording of stereoscopic images which have not been defined by perspective when photographed or other non-stereoscopic images, that is, two-dimensional images.

Next, described below is the deformed original image data generation for stereoscopic images defined by perspective when photographed.

Natural stereoscopic images can be obtained in the case of images defined by the horizontal angle of view and perspective by the stereoscopic image recording apparatus shown in FIG. 5 without deformed original data generating processing as described above. However, image frames of the stereoscopic images will be caused to have trapezoidal distortion as described with reference to FIG. 13. An observer thus will observe unnatural stereoscopic images with trapezoidal image frames. The images looked by the right eye and those looked by the left eye do not agree with each other. Further, outer peripheral shapes of the images will vary when the observer looks the images from left to right. This will also result in unnatural stereoscopic images.

In order to solve the problem, the stereoscopic image recording apparatus according to the invention cuts portions of image frames of stereoscopic images to be projected defined by perspective. In detail, the stereoscopic images to be projected defined by perspective are compared with trapezoidal images obtained by the deformed image data generation described above, and portions of the stereoscopic images beyond the trapezoidal images are cut.

As described above, according to the present invention, a stereoscopic image recording apparatus is provided with an aperture stop in the projecting lens system of a projector. The aperture stop serves to increase resolution of recorded images. The recordable number of images will also be increased with no missing portions.

A stereoscopic image recording apparatus according to the present invention is further provided with diffusion plates between a light source and the projecting lens system of the projector. The diffusion plates serve to provide an almost uniform peripheral illuminance ratio.

Furthermore, a stereoscopic image recording apparatus according to the present invention is provided with a generator that generates deformed image data on the basis of an angle between an optical axis of the projecting lens and the lens plate and an angle of view of the projector. An image frame of a stereoscopic image or each two-dimensional image is deformed into a trapezoid according to the deformed image data. This cancels trapezoidal distortion caused in the stereoscopic image if not defined by perspective when photographed or the two-dimensional images. This serves to reproduce the stereoscopic image not defined by perspective or the two-dimensional images with no trapezoidal distortion.

## Claims

1. An image recording apparatus comprising:

   a projector having at least one projecting lens to project a plurality of images onto a photosensitive storage medium;
   a lens plate having a plurality of aligned lenses, provided between the projector and the storage medium, the lens plate being distant from the projector with a specific distance between an exit pupil of the projecting lens and a focal plane of the lens plate, the storage medium being placed on a focal plane of the lens plate;
   a rotator to rotate the lens plate in at least one specific direction per predetermined angle for projecting and the images on the recording medium one by one via the lens plate, thus at least one stereoscopic image or a plurality of two-dimensional images being recorded on the storage medium, the direction and the angle being decided on the basis of a positional relationship between at least one camera and an object photographed for forming the images; and
   an aperture adjuster to adjust an effective aperture of the projecting lens, the aperture adjuster being provided in an optical path through which the image is projected onto the recording medium.

2. An image recording apparatus according to claim 1, wherein the effective aperture is defined by an expression $\Phi_D = \pi \cdot L \cdot \psi / 180°N$, where $\Phi_D$ is the effective aperture, $\pi$ is a ratio of a circumference of a circle to a diameter thereof, L is the distance between the exit pupil and the focal plane, $\psi$ is an angle of field of the projecting lens and N is a number of images to be projected.

3. An image recording apparatus according to claim 1, wherein the aperture adjuster is an aperture stop provided at the exit pupil of the projecting lens.

4. An image recording apparatus according to claim 1 further comprising at least one diffusion plate to obtain a specific peripheral illuminance ratio, provided between a light source of the projector and the projecting lens.

5. An image recording apparatus according to claim 1 further comprising position restricting means for achieving an accurate positional relationship between the storage medium and the lens plate when the storage medium is placed on the lens plate.

6. An image recording apparatus comprising:

   a projector having at least one projecting lens to project a plurality of images onto a photosensitive storage medium;
   a lens plate having a plurality of aligned lenses, provided between the projector and the storage medium, the lens plate being distant from the projector with a specific distance between an exit pupil of the projecting lens and a focal plane of the lens plate, the storage medium being placed on a focal plane of the lens plate;
   a rotator to rotate the lens plate in at least one specific direction per predetermined angle for projecting the images on the recording medium one by one via the lens plate, thus at least one stereoscopic image or a plurality of two-dimensional images being recorded on the storage medium, the direction and the angle being decided on the basis of a positional relationship between at least one camera and an object photographed for forming the images; and

a generator to generate deformed image data on the basis of an angle between an optical axis of the projecting lens and the lens plate and an angle of view of the projector for cancelling trapezoidal distortion caused in the stereoscopic image if not defined by perspective or the two-dimensional images, thus an image frame of the stereoscopic image or each two-dimensional image being deformed into a trapezoid according to the deformed image data.

7. An image recording method comprising the steps of:

projecting a plurality of images by a projector having at least one projecting lens onto a photosensitive storage medium;

rotating a lens plate in at least one specific direction per predetermined angle for projecting the images on the recording medium one by one via the lens plate, thus at least one stereoscopic image or a plurality of two-dimensional images being recorded on the storage medium, the direction and the angle being decided on the basis of a positional relationship between at least one camera and an object photographed for forming the images, the lens plate being provided between the projecting lens and the storage medium, the lens plate being distant from the projector with a specific distance between an exit pupil of the projecting lens and a focal plane of the lens plate, the storage medium being placed on a focal plane of the lens plate; and

generating deformed image data on the basis of an angle between an optical axis of the projecting lens and the lens plate and an angle of view of the projector for cancelling trapezoidal distortion caused in the stereoscopic image if not defined by perspective or the two-dimensional images, thus an image frame of the stereoscopic image or each two-dimensional image being deformed into a trapezoid according to the deformed image data.

8. A storage medium on which at least one stereoscopic image has or a plurality of two-dimensional images have been recorded by projecting a plurality of images by a projector having at least one projecting lens onto the storage medium, rotating a lens plate in at least one specific direction per predetermined angle for projecting the images on the storage medium one by one via the lens plate to record the stereoscopic image or the two-dimensional images on the storage medium, the direction and the angle being decided on the basis of a positional relationship between at least one camera and an object photographed for forming the images, the lens plate being provided between the projecting lens and the storage medium, the lens plate being distant from the projector with a specific distance between an exit pupil of the projecting lens and a focal plane of the lens plate, the storage medium being placed on a focal plane of the lens plate, and generating deformed image data on the basis of an angle between an optical axis of the projecting lens and the lens plate and an angle of view of the projector for cancelling trapezoidal distortion caused in the stereoscopic image if not defined by perspective or the two-dimensional images, an image frame of the stereoscopic image or each two-dimensional image being deformed into a trapezoid according to the deformed image data.

FIG. 1A

FIG. 1B

FIG. 2A

FIG. 2B

FIG. 3A

FIG. 3B

FIG. 4A

FIG. 4B

FIG. 5

FIG. 6A    FIG. 6B    FIG. 6C

$\phi D$

$L$

4

4

**FIG. 7A**

PHOTOSENSITIVE
PLANE

4

IMAGE
WIDENED

**FIG. 7B**

$d$

4

**FIG. 7C**

$\phi D$

$\phi Di$

$L$

4

4

**FIG. 8A**

PHOTOSENSITIVE
PLANE

4

$\phi D$

$\phi Di$  IMAGE  WIDENED

**FIG. 8B**

$\phi Di$  $di$

$\phi D$

$d$

4

**FIG. 8C**

20

DIFFRACTED LIGHT

DIFFRACTED LIGHT

REPRODUCING LIGHT

4

4

4

5b

5b    5b    5a    5a    5

5a    5a    5b

5a

5a    5b    5b

5a

5a

5b

REPRODUCING LIGHT

REPRODUCING LIGHT

FIG.9A

FIG.9B

FIG.9C

Di

Di

7a

7b

FIG. IOA

FIG. IOB

F I G. 11

# FIG. 12A

# FIG. 12B

# FIG. 13

FIG. 14A     FIG. 14B     FIG. 14C

FIG. 15

FIG. 16

FIG. 17

FIG. 18

FIG. 19A

FIG. 19B

FIG. 19C

FIG. 20A

FIG. 20B

FIG. 20C

EP 0 864 919 A2

FIG. 21A    FIG. 21B    FIG. 21C

EP 0 864 919 A2

FIG. 22A

FIG. 22B

S1

ORIGINAL IMAGE
DATA INPUT

S2

TOTAL DATA
NUMBER N = ?

S3

IMAGE RESOLUTION
JUDGEMENT

$2m \times 2n \leq 640 \times 480$ ?

$2m \times 2n \leq 800 \times 600$ ?

$2m \times 2n \leq 1024 \times 768$ ?

S4

IMAGE
RESOLUTION
CHANGE ?

N

Y

S5

IMAGE SIZE CONVERSION

$2n \rightarrow 480, 2m = 2m \times 480/2n$

$2n \rightarrow 600, 2m = 2m \times 600/2n$

$2n \rightarrow 768, 2m = 2m \times 768/2n$

S6

IMAGE SIZE CONVERSION PUT
IMAGE ON VGA IMAGE SVGA
IMAGE OR XVGA IMAGE

S7

READ
IMAGE PIXELS

S8

CALCULATION ON
TRAPEZOIDAL
DISTORTION
CANCELLING

S9

N = end
?

N

Y

S10

IMAGE STORE

FIG. 23